Europäisches Patentamt

European Patent Office

Office européen des brevets

(19)

(11) Publication number : **0 443 939 A1**

(12) **EUROPEAN PATENT APPLICATION**

(21) Application number : **91400438.7**

(51) Int. Cl.⁵ : **G01P 3/488**

(22) Date of filing : **19.02.91**

(30) Priority : **21.02.90 US 482694**

(43) Date of publication of application :
**28.08.91 Bulletin 91/35**

(84) Designated Contracting States :
**DE ES FR GB IT SE**

(71) Applicant : **SNR ROULEMENTS**
**1, rue des Usines**
**F-74010 Annecy (FR)**

(72) Inventor : **Grillo, John M.**
**Cabinet Ballot-Schmit, 7, rue Le Sueur**
**F-75116 Paris (FR)**

Inventor : **Hilby, James A.**
**Cabinet Ballot-Schmit, 7, rue Le Sueur**
**F-75116 Paris (FR)**
Inventor : **La Croix, Mark E.**
**Cabinet Ballot-Schmit, 7, rue Le Sueur**
**F-75116 Paris (FR)**
Inventor : **Polinsky, Mark A.**
**Cabinet Ballot-Schmit, 7, rue le Sueur**
**F-75116 Paris (FR)**
Inventor : **Steltzer, Gordon L.**
**Cabinet Ballot-Schmit, 7, rue Le Sueur**
**F-75116 Paris (FR)**

(74) Representative : **Ballot, Paul Denis Jacques et**
**al**
**Cabinet Ballot-Schmit 7, rue le Sueur**
**F-75116 Paris (FR)**

(54) Sensor to determine rotational parameters.

(57)   A device to determine rotational parameters of a rotatable shaft mounted within a stationary tube comprising a substantially annular shaped target. The target is attached to a rotatable shaft. A target retainer has a bore for receiving the rotatable shaft, and is dimensioned to be securely attached to an interior surface of the tube. The target retainer has a radially extending surface adjacent each axial end of the target to restrain axial movement of the target, and also has an aperture adjacent the outer periphery of the target. A sensor extends into the aperture when the sensor is mounted on the stationary tube. Fasteners connect the sensor to the stationary tube.

EP 0 443 939 A1

FIG. 2

## SENSOR TO DETERMINE ROTATIONAL PARAMETERS

### BACKGROUND OF INVENTION

This invention relates generally to sensors and more particularly to sensors to determine the rotational velocities, positions, and other parameters of rotating shafts and axles for vehicles and other applications.

There are numerous devices which sense the rotation of a shaft. The resolution required for automobile applications has caused the use of add on targets, as compared to measuring the rotation of the shaft itself. In inserting vehicle axles into new or previously assembled differential and axle tube assemblies, the outside diameter of the target must be less than the inside diameter of the axle bearings. This limitation on the size of the target has limited the resolution of the parameter determination.

Another method of sensor fabrication is to insert the target into the tube prior to the connection of the axle shaft to the differential. This requires the insertion of the axle through or past the installed target, while requiring a tight fit between the axle and the inside of the target.

### SUMMARY OF THE INVENTION

In one aspect of the present invention, this is accomplished by providing an apparatus to determine rotational parameters of a rotatable shaft mounted within a stationary tube. Generally, a target and a sensor are used to measure the parameters.

The target retaining means has a bore for receiving the rotatable shaft, and is dimensioned to be securely attached to an interior surface of the tube. The target retaining means has a radially extending surface adjacent each axial end of the target to restrain axial movement of the target, and also has an aperture adjacent the outer periphery of the target. Sensor means include a sensor which extends into the aperture when the sensor means is mounted on the stationary tube. Means are included for mounting the sensor means on the stationary tube.

The foregoing and other aspects will become apparent from the following detailed description of the invention when considered in conjunction with the accompanying drawing figures.

### BRIEF DESCRIPTION OF THE DRAWING FIGURES

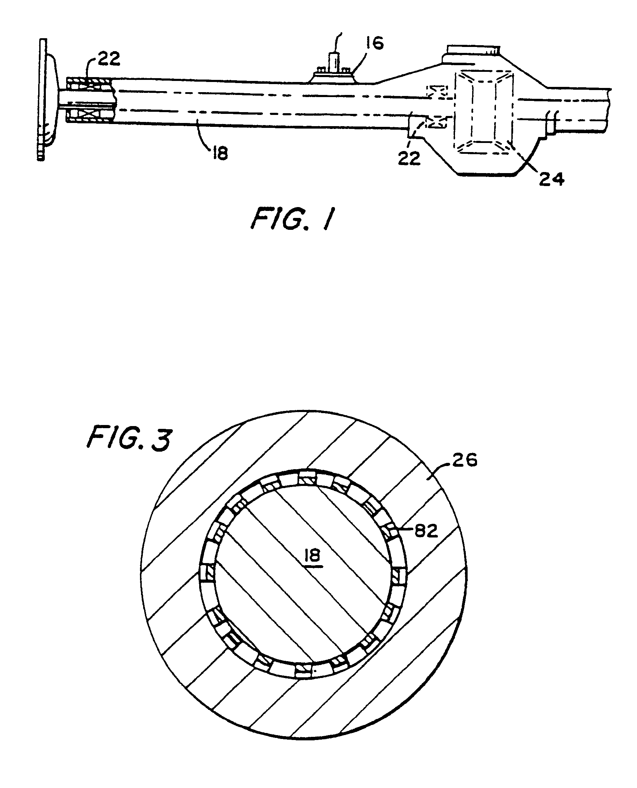

Fig. 1 is partially cut away side view illustrating a vehicle axle assembly including one embodiment of a sensor to determine rotational parameters of shafts and axles for vehicles and other applications;

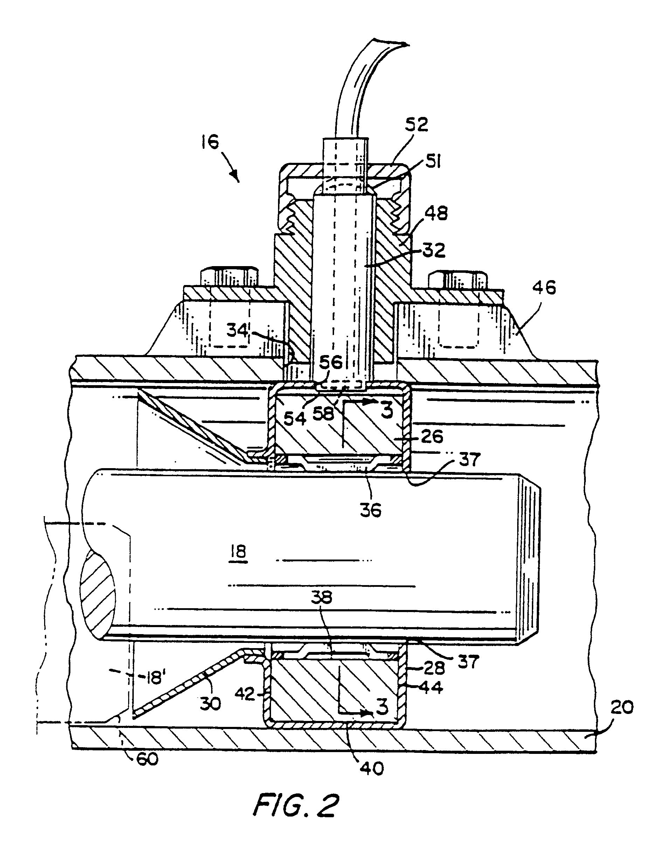

Fig. 2 is a cross sectional view of the sensor of Fig. 1 with the vehicle axle shown in phantom in the ready to insert position, and solidly in the inserted position;

Fig. 3 is a sectional view taken along line 3--3 of Fig. 2; and

Figs. 4-8 are cross sectional views of alternate embodiments of portions of the sensor, funnel and target retainer arrangements, similar to that shown in Fig. 2.

Fig. 9 is an axial view of an alternative embodiment of the instant invention wherein a sensor with a tone wheel has been substituted for the Hall-effect sensor and the target of the prior Figures.

### DETAILED DESCRIPTION

The apparatus which senses one or more rotational parameters of a shaft or axle is shown generally at 16. The rotational parameters include the speed of the axle 18 or the associated vehicle (shown in the ready to assemble position as 18'), the angular position of the shaft, the acceleration of the shaft, or other related parameters. Apparatus 16 is typically applied to an axle tube 20 of a motor vehicle.

The axle 18 is encased, and rotates within, the axle tube 20. The axle is supported by axially spaced bearings 22, and may be driven through a differential 24. The sensing apparatus 16 is mounted between the two bearings 22 such that none of the axle loads are exerted on the apparatus 16.

The apparatus includes a target 26, a target retaining means 28, a funnel 30, and sensor mount 32. A tube recess 34 is formed in the axle tube such that the sensor mount 32 may pass through the recess to be mounted in close proximity to the target.

The target 26 and the axle 18 will, in operation, rotate as one unit such that any motion of the target will provide an accurate indication of the motion or position of the axle 18. A target retention sleeve 36 may be provided to produce a tight, or interference fit between the target 26 and the axle 18. Other retention means may be used between the target and the axle as well.

The target retainer means 28 is fixably attached to an interior surface of the axle tube 20 such that the target retainer 28 will not rotate with respect to the tube while the target retainer means are in the inserted position. An interference fit between the target retainer means 28 and the tube 20 will accomplish this result. A bore 37, which the axle 18 fits through, is formed in the target retainer means 28.

The target has an inner periphery 38, an outer periphery 40, and two end surfaces 42, 44. The target retainer means 28 is in close proximity to, but not in contact with, the outer periphery 40 and the two end faces 42, 44. The target retainer means 28 acts to restrain the target in the correct position along the tube when the axle is being inserted through the bore 37. The spacing between the target 26 and the sensor mount 32 is vital to ensure proper sensing operation.

The construction of the sensor mount 32 is similarly important to ensure proper spacing. Bosses 46 are provided adjacent the tube recess 34 on the outside of the axle tube 20 to provide a mount for the sensor means. A housing 48 permits axial displacement of mount 32. A sensor nut 52 restrains excessive radial motion of mount 32.

A spring 51, acting between the mount 32 and the sensor nut 52 biases the plunger toward the target 26. This biasing action seats a foot portion 54 of the mount 32 into contact with a positioning aperture 56. Since a sensor 58 is located in the foot portion 54, this configuration locates the sensor in close proximity to the target 26 to ensure proper operation.

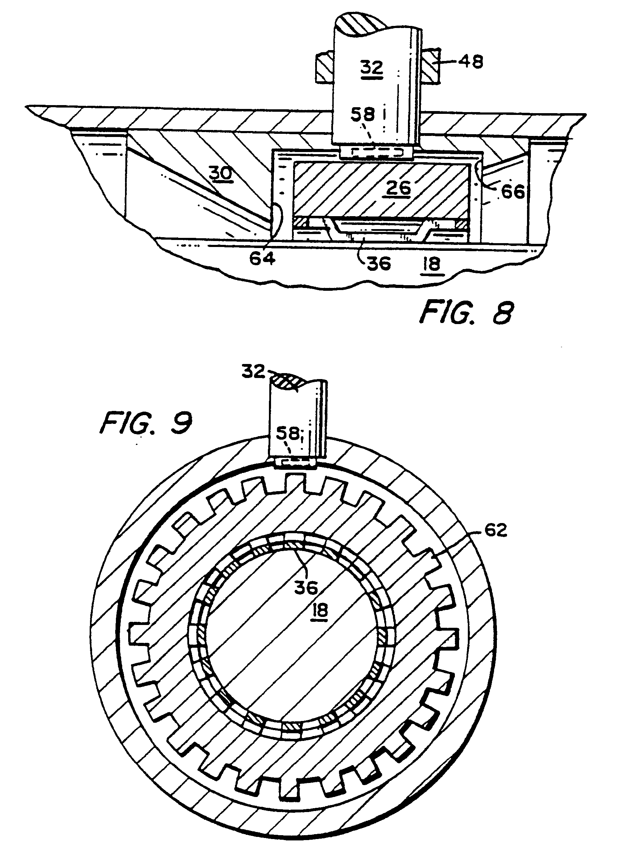

Any well known type of sensor may be used in this application. However, Hall-effect type sensors are especially applicable since these may sense angular motion are very low shaft rotational speeds. Alternately, variable reluctance type sensors may be applied to the instant invention. However, if variable reluctance sensors or Hall-effect gear tooth sensors are used, a tone wheel 62 (see Fig. 9) is typically used in place of the target.

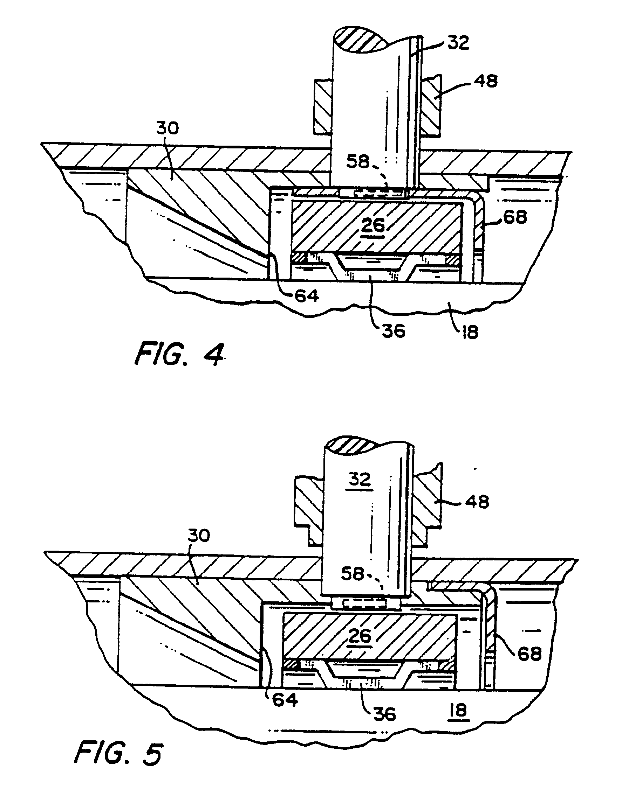

Several funnel 30 and target retainer means 28 configurations are shown in figures 4-8. Each target retainer means restricts axial movement of the target. Each structure permits the insertion of the end of the axle 18 into bore 37. The end of the axle 18 has a chamfer 60 to ease in this insertion.

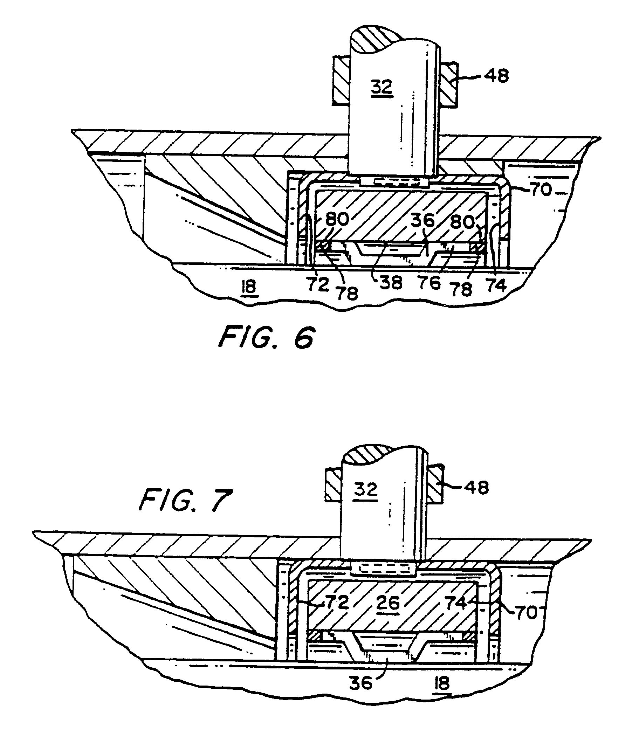

In Figs. 4-8, a solid funnel member 30 is used. In these figures, there are several alternate end plate configurations which restrict axial movement of the target. In Figs. 4,5 and 8, a funnel retainer face 64 is formed directly on the funnel 30. In Fig. 8, a second retainer face 66 is also formed as part of funnel member. Alternately, one of the faces may be formed by an L shaped cup 68 as shown in Figs. 4 and 5, or else a single U shaped cup 70 may provide both faces 72 and 74 as shown in Figs. 6 and 7.

The construction of the target retention sleeve 36 is shown in FIG. 3. Circumferentially separated cross bars 76 interconnect two axially spaced end rims 78. Surfaces 80 contact inner target surface 38. Radially inwardly extending flexible protrusions 82 exert a spring biased force against axle 18 when the axle is inserted into bore 37. The inside diameter of the protrusions 82 are normally less than the diameter of the rotatable shaft. However, the protrusions 82 are sufficiently flexible to securely grasp the inserted shaft.

FABRICATION

The primary function of the target retainer means 28 is to prevent the slippage of the target 26 from the correct axial position when the axle 18 is being positioned in the axle tube 20. In order to fabricate the entire assembly, the following procedure may be followed.

Initially, the bearings 22 are mounted inside the separated tube 20 and differential 24. The target assembly 26 is placed inside of the cup means 28, which is then placed inside the axle tube 20. The axle tube is then connected to the differential.

The axle is then fit through the bearings 22 and the bore 37 in the target retainer means 28. The funnel 30 will guide the axle into the bore and allow the end of the axle to be forced through the bore 37.

The sensor mount is thereupon mounted on the tube through the tube recess 34. In order to ensure proper functioning of the sensor 58, the sensor must be mounted closely adjacent the target 26. The housing is fastened to the bosses 46.

**Claims**

1. An apparatus to determine rotational parameters of a rotatable shaft mounted within a stationary tube comprising:
   a substantially annular shaped target;
   means for securely attaching the target to a rotatable shaft;
   target retaining means having a bore for receiving the rotatable shaft, and dimensioned to be securely attached to an interior surface of the tube, the target retaining means having a radially extending surface adjacent each axial end of the target to restrain axial movement of the target, and also having an aperture adjacent the outer periphery of the target;
   sensor means including a sensor extending into the aperture when the sensor means is mounted on the stationary tube; and
   means for mounting the sensor means on the stationary tube.

2. The apparatus as defined in claim 1 wherein the means for securely attaching the target to a rotatable shaft comprises a spring member having axially spaced end rims interconnected be circumferentially separated cross-bars, each cross bar having a radially inwardly extending flexible protrusion, the inside diameter of the protrusion being normally less than the diameter of the rotatable shaft, but having sufficient flexibility to securely grasp the inserted shaft.

3. The apparatus as defined in claim 1 further comprising:

a funnel means which assists in the insertion of the rotatable shaft into the bore.

4. The apparatus as defined in claim 1 wherein at least one of the radially extending surfaces comprises a cup.

5. The apparatus as defined in claim 1 wherein at least one of the radially extending surfaces comprises a retainer face.

6. An apparatus to determine rotational parameters of a shaft rotatively mounted within a stationary tube comprising:

a substantially annular shaped target, which is coaxially mounted on the shaft, and rotates therewith;

an target retainer means including a bore which the shaft fits through, the target retainer means is fixably attached to an interior surface of the tube, and encases the target while permitting rotation thereof;

a sensor means, which extends through an aperture in the target retainer means, the sensor means being mounted in close proximity to the target to sense the rotation of the target.

7. The apparatus as defined in claim 6 wherein the target includes an inner periphery, an outer periphery, and two end surfaces.

8. The apparatus as defined in claim 7 wherein the target retainer means is in close proximity to the outer periphery and the two end surfaces.

9. The apparatus as defined in claim 6 wherein the attachment between the target retainer means and the tube is an interference fit.

10. The apparatus as defined in claim 9 wherein the mounting between the target and the shaft is an interference fit.

11. The apparatus as defined in claim 10 wherein the interference fit between the target retainer means and the tube is greater than the interference fit between the target and the shaft.

12. The apparatus as defined in claim 6 wherein the sensor means further comprises:

a foot portion, which contains a sensor element, the foot portion extends through the aperture in the target retainer means.

13. The apparatus as defined in claim 12 wherein the sensor means further comprises:

a pilot shoulder which contacts the opening in the target retainer means when the sensor means is in a position wherein the sensor element can sense movement of the target.

14. The apparatus as defined in claim 13 wherein the sensor means includes a spring to bias the sensor element into said position.

15. The apparatus as defined in claim 6 further comprising:

a funnel means for assisting in the insertion of the shaft into the recess.

16. The apparatus as defined in claim 6 wherein the sensor means is a Hall-effect type sensor.

17. The apparatus as defined in claim 6 wherein the sensor means is a variable reluctance type sensor.

18. The apparatus as defined in claim 6 wherein the sensor means is a Hall-effect gear tooth sensor.

19. The apparatus as defined in claim 6 further comprising:

a retention sleeve to attach the target to the shaft.

FIG. 1

FIG. 3

FIG. 2

FIG. 4

FIG. 5

FIG. 6

FIG. 7

FIG. 8

FIG. 9

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4901562 (BEAKAS ET AL) <br> * column 1, lines 24 - 45 * <br> * column 1, line 64 - column 2, line 20 * | 1, 3, 5-8, 12, 15 | G01P3/488 |
| Y | * column 3, line 50 - column 4, line 48; figures 1-3 * | 2, 4, 9, 10, 16-19 | |
| Y | US-A-4090592 (JOVICK ET AL) <br> * column 1, lines 21 - 30 * <br> * column 4, lines 1 - 26; figure 1 * | 9, 17 | |
| P,Y | US-A-4940936 (GRILLO ET AL) <br> * column 3, line 60 - column 4, line 10; figures 5, 7 * | 2, 10 | |
| Y | US-A-4865468 (KATO ET AL) <br> * abstract; figure 1 * | 16, 18 | |
| Y | GB-A-1320749 (DAIMLER-BENZ) <br> * page 2, line 100 - page 3, line 1; figure 2 * | 4 | |
| Y | FR-A-2373797 (EATON CORP.) <br> * page 5, lines 14 - 32; figure 1 * | 19 | **TECHNICAL FIELDS SEARCHED (Int. Cl.5)** |
| A | | 4, 5 | G01P |

The present search report has been drawn up for all claims

| Place of search | Date of completion of the search | Examiner |
|---|---|---|
| THE HAGUE | 12 JUNE 1991 | ROBINSON M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)